# EUROPEAN PATENT SPECIFICATION

(11) **EP 0 300 580 B1**
(45) Date of publication and mention of the grant of the patent: **19.01.1994**
(21) Application number: 88201544.9
(22) Date of filing: 18.07.1988
(51) Int. Cl.: A01C 17/00

(54) **A machine for spreading material**
Streuer
Epondeur

(30) Priority: 21.07.1987 NL 8701715
(43) Date of publication of application: 25.01.1989
(73) Proprietor: C. van der Lely N.V., NL-3155 PD Maasland (NL)
(72) Inventor: Van der Lely, Cornelis, ZUG (CH)
(74) Representative: Mulder, Herman

(56) References cited:
- DE-A- 1 534 355
- GB-A- 2 058 533
- US-A- 4 149 163
- US-A- 4 180 185
- US-A- 4 239 010

## Description

The invention relates to a machine for spreading material, in particular granular and/or pulverulent material such as fertilizer, which machine comprises a frame, a hopper and at least one driven spreading member.

A machine of this kind is known from the GB-A-2 058 533. In this known construction the machine is provided with measuring means which are arranged in a distance from the rotatable spreading members. The measuring means being arranged during operation at a distance from the spreading member makes the machine in some ways complicated. The measuring means are present in the spreading pattern of the material spread out by the spreading member. Herewith an even spreading may be influenced disadvantageously.

It is an object of the invention to achieve an adequate spread of the material by the spreading member.

According to the invention, a machine of the above-defined type can be provided with at least one transmitter member to transmit waves suitable to be reflected by material spread by the spreading member during operation of the machine, the transmitter member being arranged in such a way that the transmitted waves intersect a plane in which, during operation, the material will leave the spreading member, a receiver member being provided on the machine and being suitable to receive waves transmitted by the transmitter member and reflected from the material spread by the spreading member, and that the spread of the material spread by the spreading member is measurable by the reflected waves. The quantity of the material spread by the spreading member can be measured advantageously by the receiver member receiving the reflected waves. The EP-A-0 298 549 constitutes state of the art according to Article 54(3)(4). The construction shown in this document includes receiver members which receive transmitted light from the transmitter members in so far the light may pass the material spread out by the spreader member.

In accordance with the invention, an unwanted influencing of the measurement can be prevented in an advantageous manner when, during operation of the machine, the waves are transmitted in a direction deviating from the vertical direction or in a direction deviating from a direction perpendicularly to the surface area to be spread, respectively. Thus, a reflection of the waves other than by spread material will be prevented substantially.

An advantageous construction of the machine according to the invention is obtained when the transmitted waves are received by receivers provided in the members transmitting the waves. Then, after amplification and/or decoding, the generated voltages or currents can produce a visible image in the receiver on a display device. An advantageous position of the members for transmitting or receiving waves is obtained when they are located below the spreading member and the transmitted waves are directed obliquely upwardly towards the plane along which the material is flung by the spreading member.

In accordance with a further embodiment, the transmitted waves are directed towards a reflection plane arranged on the machine, which reflection plane is arranged such that waves which are not reflected by material spread during operation is reflected into a direction away from the receiver members.

In a further feature of the machine of the above-defined type, there are provided two or more doser apertures, through which the material is supplied to the spreading member, the said doser apertures being arranged in side-by-side relationship around the rotary axis of the spreading member. In accordance with a further embodiment, at least two of the doser apertures are closable, independently of each other, to a greater or lesser extent by a closing member. An advantageous positioning of the doser apertures and flow of the material through the doser apertures is obtained when the doser apertures are provided in an arcuate wall plane. Preferably, such a wall plane is curved around a centre line located at least substantially horizontally when the machine is in the horizontal position.

In accordance with a further feature of the invention, the distribution of the material through the spread pattern over which it is spread by the spreading memmber can be displayed on a display device. In accordance with an advantageous embodiment, near the display device there are provided a plurality of control members whose number corresponds to the number of closing members, each of which closing members is coupled to a control member. Alternatively, it is possible to connect the display device to a switching mechanism which is coupled to the closing member, the arrangement being such that the information displayed on the display device automatically controls a closing member adjusting device via the said switching mechanism.

An advantageous embodiment is obtained when the display device includes indicator means, by means of which, during operation, the position of the spread pattern around the rotary axis of the spreading member relative to the direction of operative travel of the machine can be displayed. The discharge apertures can be adjusted around the rotary axis of the spreading member in relation to the displayed indications as to the position of the spread pattern.

In a further embodiment of the machine according to the invention, inside the hopper there are arranged near the doser apertures feed-through members which, during operation, influence the flow of material from the hopper through the discharge apertures. The said feed-through members can be driven advantageously by a spreading member, the rotational speed of which is adjustable. Thus, in relation to the rotational speed of the spreading member, the feed-through members will influence the flow to the spreading member through one or more of the doser apertures.

In accordance with a further embodiment of the machine according to the invention, the machine is provided with an electronic measuring device for measuring the working width of the material to be spread. The result of the electronic measuring device can be conveyed to a display device which can be provided detachably near the driver's seat of the machine. In this connection, an advantageous embodiment is obtained when the electronic measuring device measures the rotational speed of the spreading member.

In accordance with a further embodiment, the spreading member is driven by a friction wheel, while the electronic measuring device measures the rotational speed via the position of the friction wheel.

In an advantageous embodiment of the construction according to the invention, the spreading member driven by a friction wheel can be adjusted to some extent relative to its bearing in order to control the contacting force between the friction wheel and the spreading member.

A proper construction is obtained when the friction wheel is adjustable relative to the spreading member by means of a hydraulic adjusting mechanism.

According to the invention, the desired distribution of the material to be spread with the machine of the above-defined type is achieved advantageously when the machine includes only one spreading member, by means of which the material can be spread over an effective working width of up to approximately 36 metres.

For a better understanding of the invention and to show how the same may be carried into effect, some embodiments of the invention will now be described with reference to the accompanying drawings, in which:
Figure 1 is a side view of a machine according to the invention;
Figure 2 is a plan view of the machine shown in Figure 1;
Figure 3 is, to en enlarged scale, partly a cross-sectional view and partly a view taken on the line III - III in Figure 2;
Figure 4 is a plan view of the part shown in Figure 3, taken in the direction of the arrow IV in Figure 3, the cylindrically lower wall of the upper portion of the hopper being only shown in a cross-sectional view;
Figure 5 is, to en enlarged scale, a plan view of a part of the machine taken on the arrow V in Figure 1;
Figure 6 is a vertical cross-sectional view of the part of the machine shown in Figure 5, taken on the line VI - VI in Figure 5, also a part of the spreading member being shown in a cross-sectional view;
Figure 7 is an embodiment of a display and adjusting device associated with the machine according to the invention:
Figure 8 is a further embodiment of a display and adjusting device associated with the machine according to the invention;
Figure 9 is a side view of a further embodiment of a machine according to the invention;
Figure 10 is a plan view of the machine shown in Figure 9, and
Figure 11 shows, to an enlarged scale, a part of the machine according to Figure 9 in a vertical cross-sectional view, taken on the line XI - XI in Figure 10.

The machine in accordance with the invention relates to a machine for spreading material, in particular for spreading granular and/or pulverulent material such as seeds and/or fertilizer. The machine comprises a frame 1 including a trestle 2, by means of which the machine can be connected to a three-point lifting hitch 3 of a tractor or a suchlike vehicle 4 moving the machine during operation. The machine includes a hopper 5, which is supported by means of two carrier beams 6 connected to the trestle 2 and extending rearwardly relative to the direction of operative travel A. At the same time the hopper 5 is supported by the frame 1 in the region of the upper side of the trestle 2. Near its lower side, the frame 1 is provided with a supporting beam 7, by means of which the machine can bear on the soil.

The frame comprises two frame beams 8 extending parallel to the direction of operative travel A, between which beams a drive shaft 9 is located. By means of an intermediate shaft, the drive shaft 9 can be coupled to the power take-off shaft of the tractor 4. Between the frame beams 8 there is located a bearing 10 supporting an upwardly extending carrier bushing 13. The centre line 11 of the carrier bushing 13 coincides with that of the hopper 5. The carrier bushing 13 is provided with a spreading member 12 which is rotatable about an upwardly extending axis of rotation. This axis of rotation is constituted by the centre line 11 of the carrier bushing 13. In this embodiment, there is arranged only one spreading member which is located under the hopper 5. During operation, the spreading member 12 is drivable from the drive shaft 9. During operation, the material to be spread is supplied from the hopper 5 to the spreading member.

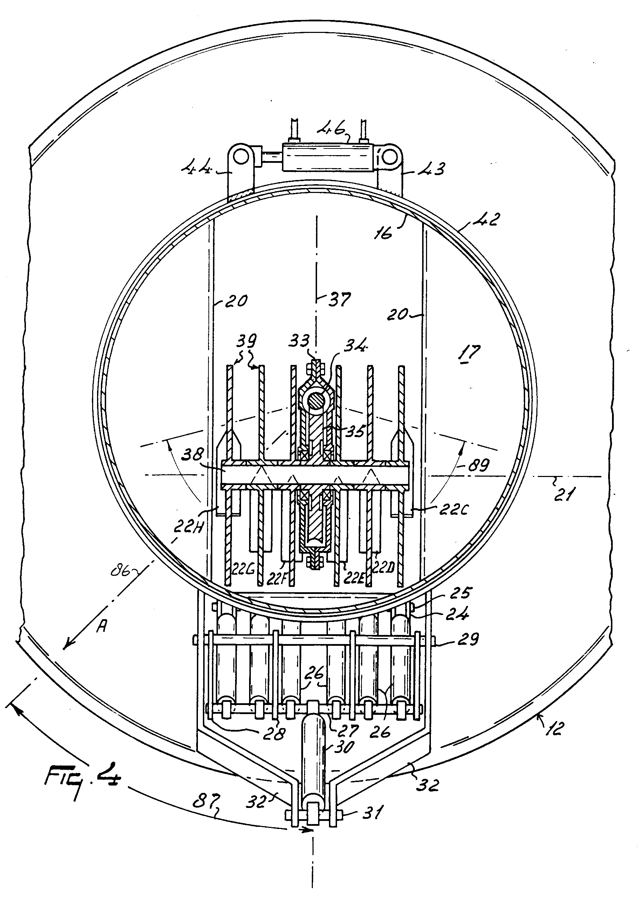

The hopper 5 includes an upper portion 15 which has a cylindrical lower edge 16 located concentrically about the axis of rotation 11 (Figure 3). The hopper 5 includes a doser portion 17 which has its upper edge 42 located around the outer circumference of the lower edge 16. The upper edge 42 of the doser portion 17 is arranged rotatably around the lower edge 16. The doser portion 17 has an arcuate wall portion 18 which is curved in accordance with a portion of a cylinder surface and whose centre line 21 is located horizontally when the machine is in a horizontal position. The doser portion 17 includes a wall portion 19 which extends obliquely upwardly from the lower side of the arcuate wall portion 18. The upper sides of the wall portions 18 and 19 are contiguous to the cylindrical upper edge 42 of the doser portion 17. The wall portions 18 and 19 are contiguous to the lower sides of wall portions 20 of the doser portion 17, which wall portions 20 extend remote from and parallel to each other in the vertical direction. In this situation, the wall portions 20 extend perpendicularly to the centre line 21. The centre line 21 is located approximately at the level of the upper sides of the wall portions 18, 19 and 20.

A number of identical doser apertures 22, in this embodiment six apertures, are provided in the wall portions 18. The doser apertures 22 are substantially of a rectangular and slotted shape. Taken in a direction parallel to the centre line 21, the doser apertures are located substantially concentrically about the said centre line 21 (Figures 3 and 4). The slotted doser apertures are arranged parallel to each other, the lower ends of which apertures taper to a point as is apparent in particular from Figure 4. Seen in plan view, the lower ends of the slotted apertures 22 are arranged at least approximately concentrically about the axis of rotation 11 of the spreading member 12. Then, the lowermost portions of the central doser apertures are located approximately perpendicularly below the centre line 21. The doser apertures 22 located in a more outward position extend to a greater extent towards the wall portion 19. The outermost apertures of the doser apertures 22 have their pointed lower ends located approximately in the position where the cylindrical wall portion 18 merges into the straight wall portion 19. Fitting against the outer side of the wall portion 18, a closing member in the form of a doser slide 23 is provided for each of the doser apertures 22. Each doser slide 23 is formed as part of a cylinder surface (Figure 3), i.e. in such a manner that the centre line thereof coincides with the centre line 21 of the wall portion 18. By means of guides extending on both sides of each doser aperture, each doser slide 23 is movable around the centre line 21. Like the doser apertures 22, the doser slides 23 are rectangular and elongate. Near their lower sides, the doser slides 23 are provided with lugs 24. The lugs 24 of the doser slides are connected by means of a pivot shaft 25 to a piston rod of a hydraulic adjusting mechanism 26 comprising said piston rod and a cylinder. Each of the hydraulic adjusting members 26 is connected pivotably to a coupling shaft 27 which extends parallel to the centre line 21. The coupling shaft 27 is connected pivotably to a number of strips 28, which furthermore are fitted pivotably about a pivot shaft 29 that extends parallel to the coupling shaft 27. In the position shown in Figure 3 wherein the doser apertures 22 are fully open and the doser slides are located thereabove, the distance between the shaft 29 and the centre line 21 is less than that between the coupling shaft 27 and the centre line 21. As is apparent from Figure 3, then the strips 28 extend at an acute angle to the cylinders of the adjusting members 26.

The midway point of the coupling shaft 27 is connected to a hydraulic adjusting member 30 which comprises a cylinder and a piston rod. At the end facing away from the coupling shaft 27, the hydraulic adjusting member 30 is connected to a pivot shaft 31 located between the ends of two brackets 32. The brackets 32 are rigidly connected to the upper side of the doser portion 17. As is apparent in particular from Figure 4, the ends of the pivot shaft 29 are supported in the brackets 32. The adjusting members 26 and 30 are located at the side of the centre line 21 that faces away from the side where the axis of rotation 11 is located (Figures 3 and 4). In this situation, as is apparent in particular from Figure 3, the centre line 21 is spaced from the axis of rotation 11. The centre line 21 and the axis of rotation 11 extend perpendicularly relative to each other. When the machine is in the horizontal position, the axis of rotation 11 is positioned vertically.

The hydraulic adjusting members 26 and 30 are all of the double-acting type. When the adjusting member 30 is blocked and one or more of the adjusting members 26 is/are energized such that its/their piston rod(s) emerges/emerge from the associated cylinder(s), then the doser slide(s) 23 coupled to the said adjusting member(s) 26 will pivot downwardly along the wall portion about the centre line 21 (taken in a direction from the position shown in Figure 3). As a result, the doser aperture(s) associated with the relevant doser slide(s) will then be fully or partly closed. Thus, it is possible to change the effective size of the doser apertures 22. The effective size of each of the doser apertures can be adjusted, independently of the other doser apertures. When one ore more of the doser slides is/are adjusted, the position of the strips 28 is not changed.

When the hydraulic adjusting member 30 is actuated such that its piston rod emerges in a direction towards the adjusting members 26, the strips 28 will pivot downwardly about the pivot shaft 29. In this situation, as is apparent from Figure 3, the coupling shaft 27 will describe the arc of a circle about the centre line of the pivot shaft 29. The relative arrangement and dimensioning are such that by the said adjustment of the adjusting member 30 the hydraulic adjusting members 26 will be adjusted as an integral whole, thereby causing all the doser slides 23 to pivot downwardly about the centre line. Then, the doser apertures 22 will all be fully or partly closed. By actuating the adjusting member 30 it is possible to operate all the doser slides 23 simultaneously. Alternatively, it is possible, of course, to actuate the adjusting member 30 and one or more of the adjusting members 26 simultaneously, so that all the doser slides 23 will pivot simultaneously and at the same time to a different extent about the centre line 21.

The doser portion 17 includes a box 33 accommodating transmission members consisting of a worm 34 and a worm wheel 35. The box 33 is connected to a downward bulge 36 formed in the wall portion 19 of the doser portion 17 (Figure 3). The box 33, the worm 34 and worm wheel 35 are arranged such that a plane 37 which comprises the centre line of the worm 34 and the centre of the worm wheel 35 coincides with the axis of rotation 11. In this situation, the plane 37 is located halfway between the, in this embodiment, six doser apertures 22. The worm wheel 35 is coupled to a shaft 38 extending on both sides from the box 33. The centre line of the shaft 38 coincides with the centre line 21. A plurality of feed-through members constituted by doser discs 39 are connected rigidly to the shaft 38. The number of doser discs 39 is equal to the number of doser apertures 22. The doser discs 39 extend perpendicularly to the shaft 38 and are constituted by plate-shaped discs provided at their outer circumference with pointed projections 41 (Figure 3). As is apparent in particular from Figure 4, the doser discs 39 extend in front of the centre of the elongate doser apertures 22. The worm 34 is rigidly attached to a shaft 71 which, from the spreading member 12, extends by means of its upper end into the doser portion 17 and into the box 33, the arrangement being such as is apparent in particular from Figure 3. The diameter of the doser discs 39 is such that the ends of its projections 41 reach to near the inner side of the wall portion 18 and to near the doser apertures 22.

The doser slides 23 together with the adjusting members 26 and 30 and the doser discs 39 together with their drive constitute, together with the doser portion 17, a doser device 40. This doser device is capable of pivoting as a whole about the axis of rotation 11 of the spreading member 12. To that end, in a manner not shown in further detail, the doser portion 17 is arranged in the machine capable of pivoting relative to the upper portion 15 of the hopper 5. Therefore, the upper edge 42 of the doser portion 17 is arranged with some clearance about the outer side of the lower edge 16 of the upper portion 15 of the hopper 5. An adjustment of the doser device 40 about the axis of rotation 11 is rendered possible by means of a hydraulic adjusting member 46. The adjusting member 46 has one end connected to a lug 43 which is connected rigidly to the upper edge 42, and the other end to a lug 44 which is connected rigidly to the upper portion 15 of the hopper 5. In this situation, the ends of the adjusting member 46 are connected to the lugs 43 and 44 capable of pivoting about pivot shafts extending parallel to the axis of rotation 11. By actuating the hydraulic adjusting member 46, the doser device 40 can be adjusted about the axis of rotation 11 relative to the frame 1 and to the upper portion 15 of the hopper 5. The hydraulic adjusting member 46 can be operated from the driver's seat of the tractor or a suchlike vehicle. Thus, it is possible, during operation, to move the direction of spread wherein the material is spread about the axis of rotation 11. For the direction of spread of the material is determined to a high extent by the position of the doser apertures around the axis of rotation 11 of the spreading member 12.

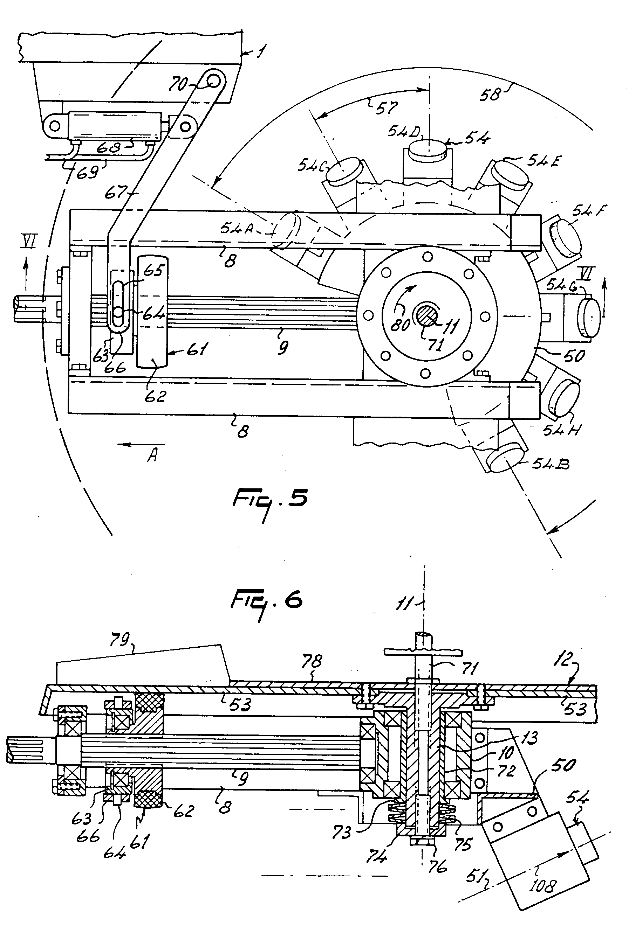

Near the lower side of the bearing 10, there is arranged under the spreading member 12 a carrier bracket 50 of an angular cross-section. The carrier bracket 50 is provided with a plurality of measuring members 54 which can transmit electromagnetic and/or sound waves. Thus, the measuring members 54 constitute transmission members for transmitting waves. As is apparent in particular from Figure 6, the measuring members are arranged obliquely, the arrangement being such that the centre lines 51 of these transmission members are located on an imaginary conical plane which tapers upwardly and has its apex located on the axis of rotation 11. The centre lines 51 are positioned such that they intersect a plane 52 which comprises the upper side of a plate-shaped portion 53 of the spreading member 12 and, in this embodiment, extends perpendicularly to the axis of rotation 11. The points of intersection 55 of the centre lines 51 with the plane 52 are located outside the periphery of the spreading member 12. These points of intersection 55 are located on an imaginary circle 56 which is located concentrically about the axis of rotation 11. In this embodiment, there are arranged eight measuring members 54 which are distributed equidistantly about the axis of rotation 11. Adjacent measuring members 54 are rotated relative to each other through an angle 57 about the axis of rotation 11, the said angle 57 being 30° in this embodiment. The centre lines of the two outermost measuring members 54 are rotated relative to each other through an angle 58 of approximately 210° about the axis of rotation 11.

Below the spreading member 12 there is arranged a friction wheel 61 to drive the spreading member 12. At its periphery, the friction wheel 61 is provided with a slightly flexible ring 62 made of e.g. rubber or a synthetic resin material. The ring 62 is located under tension against the bottom side of the plate-shaped portion 53 of the spreading member 12. The plate-shaped portion 53 extends, at least by means of its bottom side, perpendicularly to the axis of rotation 11 of the spreading member 12. By means of splines provided on the drive shaft 9 and inside the bore of the friction wheel 61 thereabout, the friction wheel 61 is connected to the shaft 9 rigidly against rotation but movably in the longitudinal direction thereof. A drive ring 63 is fitted rotatably relative to the hub of the friction wheel 61. The drive ring 63 is provided with two pins 64 which are located diametrically opposite each other and extend into slotted holes 65 of a fork 66 of a control arm 67. The control arm 67 is coupled pivotably to a portion of the frame 1 by means of a pivot shaft 70 which extends parallel to the axis of rotation 11 (Figure 5). Between the control arm 67 and the frame 1 there is arranged an adjusting member 68 which, in this embodiment, is a hydraulic one. The adjusting member 68 has one end connected pivotably to the frame 1 and the other end is coupled pivotably to the control arm 67. The adjusting member 68 constitutes a double-acting hydraulic adjusting member. In a manner not shown in further detail, the cylindrical portion of the adjusting member 68 is connected to a control mechanism for the adjusting member 68 by means of lines 69.

The spreading member 12 is supported rotatably by means of the carrier bushing 13 in the bearing 10 in such a manner that the spreading member 12 is capable of moving slightly in the vertical direction relative to the said bearing 10. For that purpose, the carrier bushing 13 is provided slidably in a bushing 72 having a flanged ring 73 which bears against the bottom side of the bearing 10. Between the ring 73 and a supporting ring 74 provided at the bottom of the shaft 71 there is arranged a spring-loaded mechanism constituted by dish springs 75. The said dish springs try to keep the distance between the ring 73 and the supporting ring 74 as large as possible. By means of a threaded bolt 76, the supporting ring 74 can be adjusted to some extent relative to the lower end of the carrier bushing 13. For that purpose, the threaded bolt 76 is arranged within a threaded hole in the carrier bushing 13. The shaft 71 is fitted in the upper side of the threaded hole of the carrier bushing 13, the arrangement being such as is apparent in particular from Figure 6. The threaded connection between the shaft 71 and the carrier bushing 13 is such that, during operation, the shaft 71 is connected to the spreading member 12 rigidly against rotation. In its centre, the plate 53 of the spreading member 12 is reinforced by a stiffening plate 78. From the shaft 71 the stiffening plate 78 extends to the ends of the thrower blades 79 associated with the spreading member 12 that are nearest to the axis of rotation 11. The thrower blades 79 extend from the circumference of the stiffening plate 78 to near the periphery of the plate 53. Taken in the radial direction from the axis 11, the length of the blades is approximately equal to the radius of the stiffening plate 78.

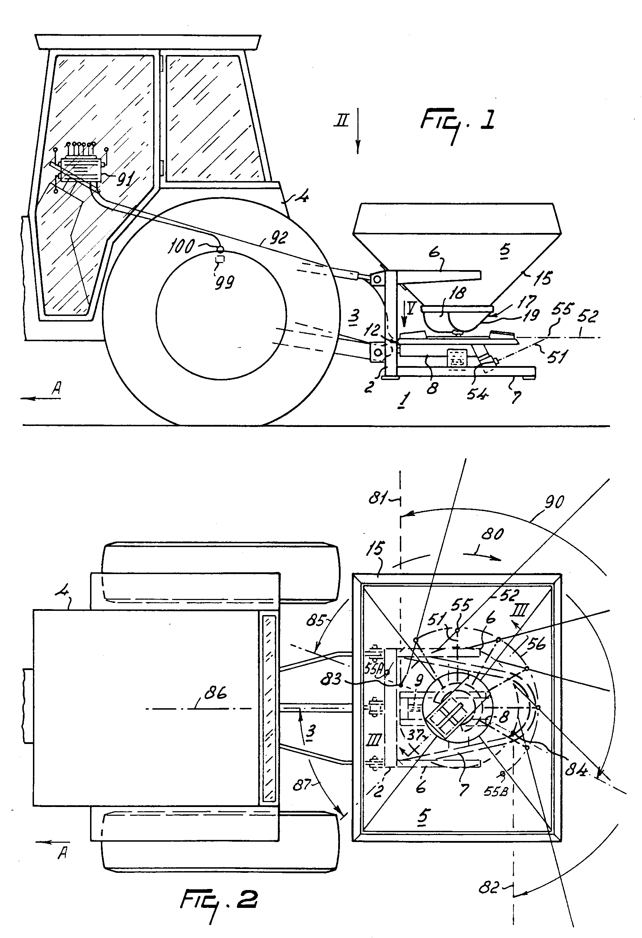

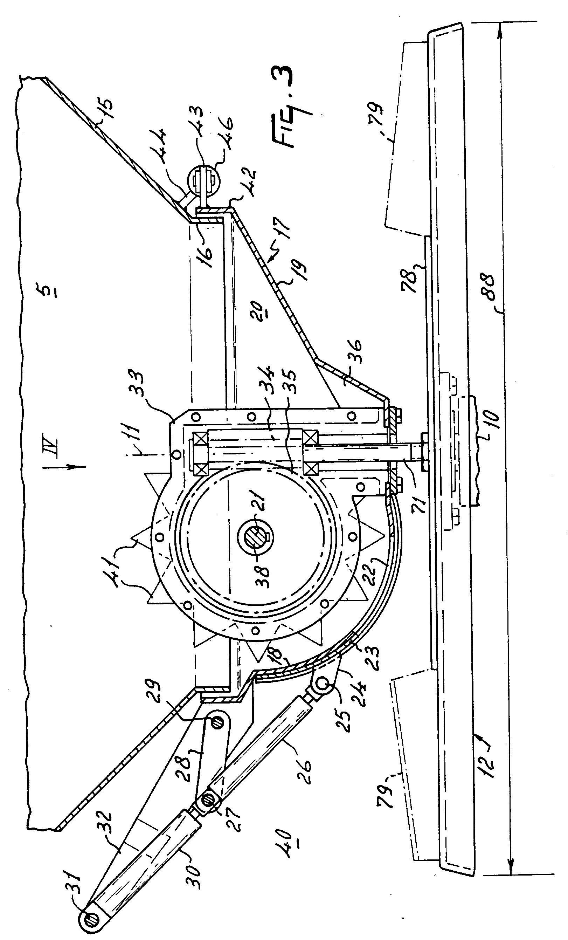

Prior to use, the machine is coupled to the lifting hitch 3 of a tractor 4 or a suchlike vehicle, as is shown in Figures 1 and 2. The drive shaft 9 is coupled to the power take-off shaft of the tractor by means of an intermediate shaft.

The material to be spread is supplied to the spreading member 12 from the hopper 5. During operation, the spreading member 12 is caused to rotate in the direction indicated by the arrow 80. The rotation of the spreading member in the direction of the arrow 80 about the axis of rotation 11 is obtained via the friction wheel 61, which under tension bears against the bottom side of the plate 53 of the spreading member 12. The friction wheel 61 is driven from the power take-off shaft of the tractor 4 by means of the drive shaft 9. The tension under which the bottom side of the plate-shaped portion 53 of the spreading member 12 bears against the periphery of the friction wheel 61 can be set by turning the threaded bolt 76 to a greater or lesser extent into the threaded hole of the carrier bushing 13. This determines the distance between the ring 73 and the supporting ring 74, as a result of which the tension between the dish springs 75 and the supporting ring 74 and, hence, that between the spreading member 12 and the periphery of the friction wheel 61 are determined. Preferably, the tension between the periphery of the friction wheel 61 and the spreading member 12 will be chosen such that, during normal operation, there will occur no slip between the two. In this connection, the peripheral ring 62 is preferably made of a slightly resilient anti-slip material. The stiffening plate 78 stiffens the plate 53 so as to counteract a pushing of same out of alignment relative to the axis 11 under the influence of the force at which the friction wheel bears thereagainst. The speed at which the spreading member 12 can be rotated in the direction of the arrow 80 about the axis of rotation 11 is controllable by shifting the friction wheel 61 in the longitudinal direction of the drive shaft 9. The shaft 9 extends perpendicularly to the axis of rotation 11. At a given number of revolutions of the drive shaft 9, the speed at which the spreading member 12 is driven about the axis of rotation 11 will increase when the friction wheel 61 is moved towards the axis of rotation 11. A decrease of the rotational speed of the spreading member will be obtained by moving the friction wheel away from the axis of rotation 11. Preferably, the diameter of the spreading member 12 and the distance through which the friction wheel 61 can be displaced radially over the drive shaft 9 relative to the axis of rotation 11 are chosen such that the number of revolutions of the spreading member will range at least between 200 and 1000 revs/min. In the embodiment shown wherein the diameter of the spreading member 12 is approximately 80 cms, the number of revolutions of the spreading member is controllable between 200 and 600 revs/min. A sliding of the friction wheel 61 along the drive shaft 9 can be effected via the control arm 67. To that end, the control arm 67 can be adjusted about the pivot shaft 70 relative to the frame 1 by means of the hydraulic adjusting member 68. The rotational speed of the spreading member 12 determines to a large extent the force under which the material is spread. This force determines the distance through which the material can be thrown by the spreading member. Hence, the rotational speed of the spreading member 12 determines the working width over which the material can be spread during operation. Preferably, in normal operation when the machine travels in the direction A, the material is spread over a width which extends equally far on both sides of the centre plane 86 including the longitudinal centre line of the machine. In addition to the speed of rotation, the type of material and the shape of the spreading member 12 cum thrower blades 79, too, determine the distance over which the material can be thrown by the spreading member at a given speed. Also important are, for example, the size and weight of the grains of material to be spread. Therefore, preferably a calibration is to be effected for each type of material in order to establish the distances over which it can be spread at the various rotational speeds of the spreading member. Preferably, the spreading member is structured such and its rotational speed is chosen such that, optionally, the material can be spread over an effective working width of approximately 10 to 36 metres.

The quantity of material to be spread per unit of time is controllable by adjusting the flow of material from the hopper 5 via the doser apertures 22. The size of the doser apertures is chosen such that the maximum desired quantities of material can flow from the hopper 5 per unit of time and be supplied to the spreading member. In particular because of the pointed, low-lying ends of the doser apertures, the joint flow opening size of the doser apertures 22 can be chosen so small that it is possible to set even the smallest desired quantities of material to be supplied to the spreading member per unit of time. The free passage of the doser apertures 22 is adjustable by closing same to a greater or lesser extent by means of the doser slides 23 via the adjusting members 26 and/or 30.

In dependence on the location where the material is supplied to the spreading member and on the diameter and design thereof, the material to be spread is thrown by the spreading member through a predetermined angle about the axis of rotation 11. At a given construction of the spreading member, this angle may be chosen in dependence on the manner of the material supply to the spreading member. In this embodiment, the spreading member 12 is shaped such and the material to be spread is supplied thereto in such a manner that, during normal operation, the material can be thrown by the spreading member through approximately 180° about the axis of rotation 11. In this embodiment, the position of this 180° angle is chosen such that the outermost spread lines of the spread pattern of the material extend perpendicularly to the direction of operative travel A. Then, one outermost spread line will extend at one side of the machine along the line 81 and the other at the other side along the line 82. The points 83 and 84 where the outermost spread lines 81 and 82 originate at the spreading member periphery are located diametrically opposite each other relative to the axis of rotation 11. In this situation, during operation of the machine, the material will leave the periphery of the spreading member between the points 83 and 84 through a spread angle 85 of 180°, i.e. through the angle extending in the direction of rotation 80 from point 83 to point 84. In order to obtain the spread of material through the spread angle 85, the doser apertures 22 are displaced in a given manner relative thereto. To some extent in dependence on the type of material to be spread, the doser apertures 22 will be displaced through a given angle from the point 83 in a direction opposite to the direction 80. For the spreading of most types of fertilizers, for which the machine is mainly intended, the doser apertures 22 will be displaced through such an angle from the point 83 in a direction opposite to the direction 80 that the plane 37 located between the midway point of the six doser apertures 22 is situated at the other side of the centre plane 86 than the point 83. In this embodiment, the angle 87 between the plane 86 and the plane 37 is approximately 45°. Then, the point 83 is in a position which is displaced from the plane 86 through approximately 20° about the axis of rotation 11. Depending on the type of material to be spread, the angle 87 may be slightly larger or smaller. This angle also depends on the distance through which, on an average, the doser apertures are spaced from the axis of rotation of the spreading member and on the diameter thereof. In this embodiment, the diameter of the spreading member is approximately 80 cms. Preferably, the diameter 88 is more than 60 cms and less than approximately 130 cms. In order to obtain the spread angle 85 of approximately 180°, the doser apertures 22 are distributed through an angle 89 about the axis of rotation 11. This angle 89 is less than 180° and, in this embodiment, approximately 150°. The distribution of the material flowing to the spreading member through the angle 89 also determines the distribution of the material over the spread pattern 90 within the spread lines 81 and 82. The distribution of the material over the angle 89 can be controlled by adjusting the passage size of the doser apertures 22 individually.

In order to check the direction of spread and the distribution of the material through the spread angle 85 or through the spread pattern 90, respectively, there are arranged measuring members 54. The said members 54 comprise transmission members for transmitting electromagnetic and/or sound waves. During operation of the machine, these waves are transmitted by each of the transmission members substantially parallel to its centre line 51 in the direction of the arrow 108. The centres of these waves intersect the plane 52, in which plane the material will leave the spreading member, in the points 55 (Figures 1 and 2). The granules spread in the plane 52 and passing the points 55 will reflect the sound waves back into the direction of the measuring members 54. Each of these measuring members 54 also includes a receiving member for receiving the waves reflected by the granules of material. In dependence on the intensity and the distribution of the material through the pattern wherein it is spread, a greater or lesser number of transmitted waves will be reflected. In accordance with the invention, this greater or lesser extent of reflection is used as an indication for the direction of spread and/or for the distribution of the material through the spread pattern between the spread lines 81 and 82 and/or for the quantity of material spread per unit of time. The measuring members 54, eight members in this embodiment, are arranged such around the axis of rotation that the outermost two thereof transmit the waves intersecting the plane 52 in points outside the spread pattern 90 bounded by the spread lines 81 and 82. The further measuring members 54, six members in this embodiment, will transmit waves towards the plane 52 within the spread pattern 90. Then, during spreading of the material, the waves will be reflected to a greater or lesser extent and be transmitted back to the measuring members 54 which also comprise receiving members for the said reflected waves. The intensity of the retransmission of the waves to the members 54 depends on the spread density of the material in the spread pattern 90 in the region of the relevant points 55. The waves received back in the members 54 can generate electric voltages or currents, which can be passed on to equipment coupled to the measuring members 54 and associated therewith. Since the generated voltages or currents in each of the receiver members 54 depend on the reflected waves, they can give an indication as to the density of the material in the spread pattern in the region of the relevant points 55 in a given period of time.

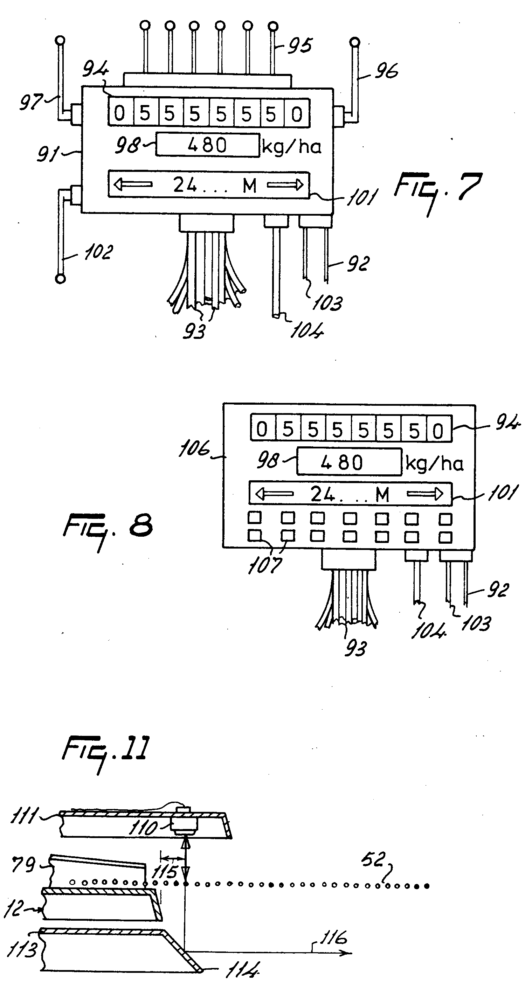

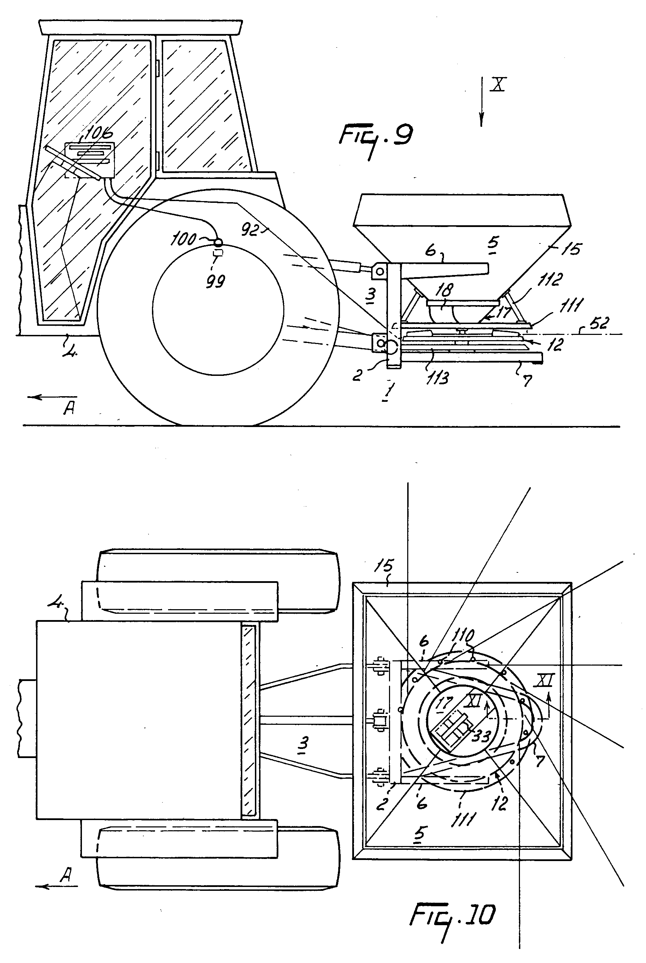

Figure 7 shows an embodiment of a display device 91, to which is also associated an apparatus comprising circuitry, which apparatus is intended to process the information received from the receivers of the members 54. By means of a cable 92, the display device 91 is connected to the measuring members 54 and, by means of hydraulic lines 93, to the hydraulic adjusting devices 26, 30, 46 and 68 of the machine. In a manner not shown in further detail, the display device 91 is provided with means with the aid of which it can be secured detachably to a support or to an other means located near the driver's seat of the tractor or of a such-like vehicle moving the machine. Thus, during operation, the driver can observe directly the information displayed on the display device 91 and, if necessary, adjust the various members of the machine on the basis thereof. By way of example, the following procedure might be followed, it being assumed that the spread of material should be effected over the spread pattern 90. When, for example, the material is spread somewhat displaced relative to the spread pattern 90 about the axis of rotation 11, the waves transmitted by one of the outermost members 54A or 54B will intersect the plane 52 within this displaced spread pattern. Then, the material spread will reflect the transmitted waves to one of the outermost members 54A or 54B. These reflected waves supply to the relevant member 54A or 54B a signal which is passed on to the display device 91. The display device 91 has a window 94 which is divided into a number of sections equal to the number of members 54, so eight sections in this embodiment. Each of these sections displays, in digital form, an indication which is related to the received, reflected waves, so in dependence on the spread density in the region of the relevant point 55. When the outermost two sections, as is shown in Figure 7, display a zero, then this is an indication that the outermost members 54A and 54B transmit waves which are not reflected by material particles in the region of the points 55A and 55B. A displaced spread pattern causes in one of the outermost sections of the window 94 the digit "0" to be changed into a different digit. This is an indication that the spread pattern 90 is not in a position as shown in Figure 2 and optionally must be returned to this position. This can be effected by rotating the doser device 40 about the axis of rotation 11 by means of the adjusting member 46. This adjustment will be effected until the two outermost sections of the window 94 again display a "0". When the spread pattern is in a correct position, e.g. in the position shown in Figure 2, then the material will be distributed over the entire spread pattern 90. Each of the members 54, the outermost members 54A and 54B excepted, will then receive transmitted waves after reflection. These reflected waves produce an indication in those sections of the window 94 which correspond to the relevant members. When the reflection of the waves is effected in accordance with the desired distribution of the material through the spread pattern, then each of the members 54 displays in the relevant section of the window 94 a given digital indication, which in this embodiment is represented by a "5". When in one or more of the relevant sections of the window 94 this indication is not displayed, then this implies that the material is not spread through the pattern 90 in the desired distribution. Alternatively, these digits "5" given as an indication for a desired distribution may be chosen differently.

The number of members measuring the material in the spread pattern 90 corresponds to the number of doser apertures 22. In the embodiment shown, six members 54 measure within the spread lines 81 and 82 and hence correspond to the six doser apertures 22. The position of the doser apertures along the material supply angle 89 about the axis of rotation 11 is in a certain relationship to the distribution of the material through the spread pattern 90 within the spread lines 81 and 82. Consequently, the doser apertures 22C to 22H are in a certain relationship to the members 54C to 54H. For the material supplied to the spreading member 12 through the doser aperture 22C will be spread for a large portion in the region of the spread pattern 90 where the waves transmitted by the member 54C intersect the plane 52. A large portion of the material supplied to the spreading member 12 in consecutive sequence via the doser apertures 22D to 22H will move in the spread pattern 90 in the region where the waves transmitted by the consecutive members 54D to 54H intersect the plane 52. When, for example, in the relevant sections of the window 94 the displayed indications do not correspond to the desired indication, which in this embodiment is a "5", but display a higher or a lower digital value, then this is an indication that too much or too little material passes the spread pattern in the relevant location. In dependence thereon, the relevant doser slide 23 can close the relevant doser aperture 22 to a greater or lesser extent so as to control the quantity of material supplied to the spreading member per unit of time in the region of the relevant doser aperture. Thus, the distribution of the material over the spread pattern 90 within the spread lines 81 and 82 can be controlled. The equal indication in Figure 7 by a "5" in the various sections of the spread window 94 is not a sure indication that the distribution of the material through the spread pattern between the spread lines 81 and 82 is such that the spread density through the entire spread pattern is the same. For example, in dependence on the manner in which one wants to distribute the material over the spread width, it will be possible to spread near the spread lines 81 and 82 less material per unit of time than in the centre of the spread pattern 90. When, for example, the aim is a spread pattern wherein most of the material is spread in the centre of the working width through which the material is spread during travel of the machine, which quantity gradually decreases from the centre of this working width to the edges thereof, then this distribution will substantially be desired also over the spread pattern within the spread lines 81 and 82. In that case, the two centremost members 54E and 54F will measure more material per unit of time than the members 54C and 54H located near the spread lines 81 and 82. In spite of this difference, the spread window 94 can display the same indication, e.g. the digit "5". It is alternatively possible to have this indication increased from e.g. "1" to "3" from the member 54C to the member 54E and to have it decreased thereafter again from the member 54F to the member 54H, the relevant indications "1", "2" and "3" being displayed in the corresponding sections in the window.

Alternatively, the distribution of the material over the spread pattern 90 may be adjusted by closing the relevant doser apertures 22C to 22H to a greater or lesser extent, so that the spread density is approximately equal through the entire spread pattern. Then the relevant spread section in the window 94 may show, for an identical indication, that the distribution through the entire spread pattern is approximately equal. Depending on the indications displayed in the sections of the window 94, the doser slides 23 may be pushed to a greater or lesser extent in front of the relevant doser apertures 22C to 22H. Each of these doser slides can be operated by one of the control levers 95 which corresponds to the relevant section and hence to the relevant aperture 22.

When the spread pattern is not located in the correct position about the axis of rotation 11 and one of the outermost members 54A or 54B gives an indication thereof, the entire doser device 4 can be adjusted about the axis of rotation. For that purpose, the display device 91 is provided with a control lever 96 which is coupled to the adjusting member 46. The reflections of the waves transmitted by the members 54 also furnish an indication as to the quantity of material passing per unit of time. This indication provides a clue as to whether the exact quantity of material is being spread per unit of time. When in its totality too little material is spread, all the doser slides 23 together can be adjusted by the adjusting member 30. In order to adjust the adjusting member 30, the device 91 is provided with a control lever 97. In order to obtain an indication as to the quantity of material spread per unit of time and hence per unit of surface area, the display device 91 includes an adder circuit for the voltages or currents generated by the members 54, which circuit is provided in addition to the above-described circuit for establishing the uniformity of the distribution of material. This adder circuit produces a measuring result which is a measure of the total quantity of material spread per unit of time. On the basis thereof, the adjusting member 30 can be operated by means of the control lever 97. For this adder circuit, a calibration can be effected for a specific type of fertilizer, so that the measuring result measured by the members 54 is appropriately related to the quantity of material spread per unit of time. This quantity of material furthermore furnishes, in dependence on the width through which the material is spread, an indication as to the number of kilogrammes spread per hectare at a given rate of travel. The device 91 has a window 98 wherein the number of kilogrammes spread per hectare is displayed. Figure 7 shows, by way of example, a spread of 480 kgs/ha. In order to establish the relation to the rate of travel, the vehicle moving the machine is provided with indication means 99 and 100 arranged at e.g. a wheel and the frame of the tractor, respectively. These indication means 99 and 100 produce an indication as to the rate of travel of the machine, so that on the basis of this indication and the known spread width the number of kilogrammes per hectare can be calculated. The implement is also provided with the circuits required for this calculation.

In this embodiment of the machine according to the invention, the speed of the spreading member 12 can be controlled. As a result thereof, the spread width of the spreading member is controllable. The rotational speed of the spreading member 12 depends on the distance between the friction wheel 61 and the axis of rotation 11. The position of the friction wheel 61 and hence the position of the adjusting member 68 for the friction wheel 61 provide an indication as to the working width of the machine. This working width can be displayed in the window 101. In this embodiment, an effective working width of 24 metres is shown by way of example. At a given rotational speed of the spreading member 12, the working width depends on the type of material, for which a calibration can be made in advance. Thus, for the relevant numbers of revolutions of the spreading member 12 the relevant spread widths can be displayed in the display device. An increase or decrease of the spread width can be effected by moving the friction wheel 61 along the drive shaft 9. The setting of the adjusting member 68 and of the friction wheel 61 relative to the spreading member 12 to obtain the desired number of revolutions of the spreading member are based on a fixed value of the number of revolutions of the drive shaft 9. The movement of the friction wheel 61 along the shaft 9 is allowed by the adjusting member 68. For that purpose, the device 91 is provided with a control lever 102 which is coupled to the adjusting member 68. Since the spread width in relation to the rate of travel of the machine and the quantity of material spread by the spreading member per unit of time give a result for the quantity of kilogrammes spread per unit of surface, the mechanism 91 is provided with a circuit which, in relation to said values, can calculate the number of kilogrammes per hectare, which is displayed in the window 98. The device 91 has a cable connection which is coupled to the indication means 99 and 100 and a hydraulic connection which is coupled to the hydraulic adjusting member 68.

Although in this embodiment there are shown a plurality of adjusting members cum measuring members and circuits in combination with each other, it is alternatively possible to use only one or more of these adjusting members cum associated measuring members and circuits. Thus, for example, it is possible to use a combination of part of said adjusting members cum associated electronic measuring members without e.g. the working width being variable by a change in the rotational speed of the spreading member 12.

Figure 8 shows an alternative embodiment of the display device illustrated in Figure 7. Like in the preceding embodiment, this display device 106 has corrresponding windows 94, 98, 101 which serve to display the same quantities and, therefore, are denoted by the same reference numerals. In the embodiment of Figure 8, however, no control levers for operating the various adjusting members 26, 30, 46 and 68 are shown. In this embodiment, the display device 106 has a plurality of keys 107. By means of these keys 107, it is possible to input in the circuits of the measuring members what are the desired quantities for the position of the spread pattern, for the distribution of the material through the spread pattern and for the number of kilogrammes spread per hectare at a predetermined spread width. The inputted value of each quantity can be displayed in the relevant window. The inputted values are converted into analog values as a voltage or a current and are compared with the measuring results of the relevant members, for example the members 54, with the rate of travel of the implement and with the position of the adjusting member 68, respectively. A differential voltage or a differential current between the actual and the desired values of the relevant indication is used, after amplification, to drive e.g. a small stepper motor which adjusts the relevant adjusting members, which correspond to the associated members 54, so that the differential voltage or differential current becomes "0" again. Similarly, an inputted value for the total quantity of material to be spread per unit of surface is converted into an analog value, it being possible for a difference with the result of the above-described adder circuit to be converted, for example also by means of a stepper motor or by adjustment of the hydraulic slide, to adjust the adjusting member 30. This can be effected in the same way for the adjustment of the adjusting member 68 to obtain the desired rotational speed of the spreading member.

The indication means 99 and 100 measuring the rate of travel of the tractor and hence that of the machine are, for example, formed by an inductive pick-up device 99 provided in a known per se manner near the periphery of a tractor wheel rim. An output voltage or current derived from the pulses generated in the pick-up device 99 is included such in the above-stated circuit that the occurring or inputted value of the desired quantity of material to be spread at the standard rate of travel per unit of surface is automatically corrected in proportion to the quotient of the actual rate and the standard rate of travel.

As an alternative embodiment, instead of with transmitter and receiver members 54, the machine may be provided with transmitter and receiver members 110 as shown in Figures 9, 10 and 11. The transmitter and receiver members 110 are fitted to a hood 111 which is connected to the hopper 5 by means of arms 112. Below the spreading member there is arranged a cover 113 which has a circumferential edge 114 extending, for example, at an angle of approximately 45° relative to the surface area to be spread. This edge 114 is positioned such that, in the vertical position of the machine, it is located vertically below the transmitter and receiver members 110. The transmitter and receiver members 110 operate in the same way as the members 54, so that they will not be described in further detail. In this embodiment, the waves transmitted by the transmitter members will be reflected by the material spread in the plane 52 or be reflected from the edge 114. When the waves hit the edge 114, they are deflected such because of the position of the edge 114 in, for example, a direction 116 that the waves will not reach the receiver section of the member 110. Therefore, only the waves reflected by the material furnish an indication to the receiver of the member 110. These indications can be displayed again in the same way in display members, such as the display members 91 or 106 shown in Figures 7 and 8, the arrangement being such as has been described in the foregoing, so that it will not be gone into in further detail here. The members 110 can be arranged in the same manner around the axis of rotation 11 of the spreading member 12 as shown for the members 54, so that also in this respect no further explanation will be required. The transmission of the waves is such that it is effected at some distance from the periphery of the spreading member 12. Preferably, the distance between the point where the waves intersect the plane 52 and the periphery of the spreading member is not too large and not too small, to ensure that a correct indication is obtained. In the embodiments shown in Figures 1 to 8 and in Figures 9 to 11, the respective distance 115 is somewhat larger in the first embodiment than in the second embodiment. Preferably, this distance 115 will be within predetermined limits and, for example, not be less than 5 cms and not more than 50 cms. By deflecting the waves transmitted by the members 110 in the direction 116 or in a different direction such that no reflection to the receiver occurs other than by the material spread, an optimally accurate indication is obtained by the receiver portions of the measuring members 110. For this reason, the members 110 may be provided also close to the plane 52.

Although in this embodiment the plane 52 extends perpendicularly to the axis of rotation 11, it may also be of a conical shape. This is possible, for example, when the spreading member includes a conical plate section to which the material supplied to the spreading member flows and via which it is then spread.

By means of the machine according to the invention, it is possible to spread material, in particular fertilizer or similar materials, to advantage over a surface area to be spread. The operator can check from his seat via the illustrated electronic measuring and display equipment, such as the devices 91 or 106, over what working width the material is spread by the machine, what quantity of material the machine spreads per hectare and/or whether the material is distributed uniformly and spread in the right direction, i.e. whether the working width extends equally far on both sides of the implement or is located behind the machine, respectively. If so desired, it is also possible to spread with the implement half a spread pattern. To accomplish this, half the number of doser apertures is closed; depending on whether the doser apertures 22C to 22E or the doser apertures 22F to 22H are closed, the material is only thrown to the left-hand side or to the right-hand side of the machine. Also such a spread pattern can be checked by means of the measuring equipment as shown.

When the display device 91 of Figure 7 is used, the various control members can be adjusted by the operator, if necessary, in dependence on his observations. Using the equipment shown in Figure 8, all this will be done automatically. Nevertheless, the driver can always ascertain whether the spread is effected in the correct manner on the basis of the indications displayed in the relevant windows of the display device. Both in case of manual operation and automatic operation, the operator can decide over what width the material must be spread. Thus, it is possible to control the quantity of material to be spread per hectare, the distribution of the material over the working width and the position of the spread pattern and of the spread direction, respectively, e.g. behind the machine or to the left or to the right thereof.

The flow of the material from the hopper through the doser apertures to the spreading member will also be stimulated by the doser discs 39. These doser discs rotate via the drive in the box 33 in dependence on the rotational speed of the spreading member. Thus, the doser discs 39 advantageously co-operate to spread the desired quantity of material per hectare in dependence on the rotational speed of the spreading member. In this situation, it is advantageous for the speed of rotation of the doser discs 39 to be related to the rotational speed of the spreading member 12, which via the speed reduction transmission constituted by the worm 34 and the worm wheel 35 drives the doser discs during operation of the machine.

The waves transmitted by the respective members 54 and 110 may be radar, ultrasonic, ultraviolet and/or infrared waves. Any transmission of given waves or rays that can be reflected by the material to be spread can be utilized.

Although in this embodiment the hopper is provided with six doser apertures, this number may also be chosen differently. It is also possible to choose the number of members, such as the members 54 or 110, to be different from the number shown in the embodiment.

## Claims

1. A machine for spreading material, in particular granular and/or pulverulent material such as fertilizer, which machine comprises a frame (1), a hopper (5) and at least one driven spreading member (12), characterized in that the machine is provided with at least one transmitter member (54, 110) to transmit waves suitable to be reflected by material spread by the spreading member during operation of the machine, the transmitter member (54, 110) being arranged in such a way that the transmitted waves intersect a plane (52) in which, during operation, the material will leave the spreading member, a receiver member being provided on the machine and being suitable to receive waves transmitted by the transmitter member and reflected from the material spread by the spreading member, and that the spread of the material spread by the spreading member (12) is measurable by the reflected waves.

2. A machine as claimed in claim 1, characterized in that the quantity of material spread during operation of the machine is measurable by the waves which are transmitted and reflected and which are in particular radar, ultrasonic, ultraviolet and/or infrared waves.

3. A machine as claimed in claim 1 or 2, characterized in that, during operation of the machine, the waves are transmitted in a direction (108) of the plane (52) along which the material is thrown by the spreading member (12), the said direction deviating from the vertical direction, or in a direction deviating from a direction perpendicular to the surface to be spread.

4. A machine as claimed in any one of the preceding claims, characterized in that the generated voltages or currents, after amplification and/or decoding, in the receiver member display a picture on a display device.

5. A machine as claimed in any one of the preceding claims, characterized in that a number of transmitter and receiver members are arranged around an axis about which the spreading member is movable, the transmitter and receiver members are arranged at the same side of the plane in which the material leaves the spreading member.

6. A machine as claimed in any one of claims 1 to 5, characterized in that the member (54) for transmitting the waves is located below the spreading member (12).

7. A machine as claimed in any one of claims 1 to 6, characterized in that the transmitter member (110) is arranged to transmit waves in a direction parallel to the axis (11) about which the spreading member (12) is movable.

8. A machine as claimed in any one of claims 1 to 7, characterized in that the transmitter members (110) cooperate with a reflecting plane (114) arranged on the machine, the said reflecting plane being arranged such that waves which are not reflected by material spread during operation are reflected in a direction (116) away from the transmission direction.

9. A machine as claimed in any one of the preceding claims, characterized in that the spreading member (12) cooperates with two or more doser apertures (22) through which the material is supplied to the spreading member (12), and which apertures are closable to a greater or lesser extent and through which the material can be supplied to the spreading member.

10. A machine as claimed in claim 9, characterized in that the doser apertures (22) together are closable to a greater or lesser extent.

11. A machine as claimed in claim 9 or 10, characterized in that the doser apertures (22) are provided in an arcuate wall plane (18), which wall plane is curved around a centre line (21) which is located at least substantially horizontally when the machine is in a horizontal position, the lower ends of one or more of the doser apertures (22) being located at least approximately perpendicularly below the centre line (21) of the arcuate wall plane (18).

12. A machine as claimed in any one of claims 9 to 11, characterized in that the doser apertures (22) are elongate and are located at least substantially parallel to each other.

13. A machine as claimed in any one of the preceding claims, characterized in that the distribution of the material over the spread pattern through which the material is spread by the spreading member (12) is displayable on a display device (91 or 106) which is connected by means of flexible connections to the machine and is fittable near the seat of the tractor or a suchlike vehicle to which the machine can be coupled.

14. A machine as claimed in any one of claims 9 to 13, characterized in that near each of the doser apertures (22) there is provided a closing member (23) which is adjustable independently of the closing members near the other doser apertures, the arrangement being such that the distribution of the material over the spread pattern is controllable.

15. A machine as claimed in claim 13 or 14, characterized in that near the display device (91) there are arranged a number of control elements (95) corresponding to the number of closing members, each closing member being coupled to a control member, and that the display device (91) is coupled to a switching mechanism (30, 26) which is connected to the closing members, the arrangement being such that the information displayed by the display device constitutes an automatic adjusting device for the closing members via the said switching mechanism.

16. A machine as claimed in claim 13 or 14, characterized in that the display device (106) includes a keyboard (107) which is connected to a switching mechanism to which the display device is coupled, it being possible to input via the keyboard the quantity of material to be spread per hectare and/or the distribution of the material over the spread pattern through which the material is spread by the spreading member and/or the spread width through which the material can be spread by the spreading member (12) , which values to be inputted are comparable to measured actual values.

17. A machine as claimed in any one of claims 9 to 16, characterized in that the doser apertures (22) are adjustable about the rotational axis (11) of the spreading member (12), the arrangement being such that the direction of spread of the material spread by the spreading member can be adjusted by changing the position of the doser apertures about the rotational axis, and that the display device includes indication means (94), by means of which the position of the spread pattern about the rotational axis of the spreading member in relation to the direction of operative travel of the implement can be displayed.

18. A machine as claimed in claim 17, characterized in that the doser apertures (22) are arranged in a lower end (17) of the hopper, which lower end constitutes a doser portion that is adjustable relative to the further portion of the hopper, and that the doser portion is adjustable by means of an adjusting device (46) which is coupled to an automatic adjusting mechanism which adjusts the doser portion in dependence on the indication of the position of the spread pattern about the rotational axis (11) of the spreading member (12).

19. A machine as claimed in any one of claims 9 to 18, characterized in that in the hopper (5) near the doser apertures (22) there are provided flow members (39) which, during operation, influence the flow of material from the hopper through the doser apertures.

20. A machine as claimed in any one of the preceding claims, characterized in that the machine includes an electronic measuring device for measuring the working width of the material to be spread, and that the result of the electronic measuring device is conveyed to a display device (91, 106) which can be provided detachably near the driver's seat of the machine.

21. A machine as claimed in claim 20, characterized in that the machine includes a spreading member (12) whose driven speed of travel is changeable and measurable during operation.

22. A machine as claimed in claim 20 or 21, characterized in that the electronic measurement of the rotational speed of the spreading member (12) is effected by observing the location of a friction wheel (61) driving the said spreading member (12).

23. A machine as claimed in claim 22, characterized in that the spreading member (12) is connected to a carrier bushing (13) which is movable in the longitudinal direction relative to its bearing (72) in the frame of the machine.

24. A machine as claimed in claim 22 or 23, characterized in that the friction wheel (61) is automatically adjustable for setting the rotational speed of the spreading member in order to obtain a desired working width.

## Patentansprüche

1. Streugerät, insbesondere für körniges und/oder pulveriges Gut wie Kunstdünger, mit einem Rahmen (1), einem Vorratsbehälter (5) und mindestens einem angetriebenen Streuglied (12),
dadurch gekennzeichnet, daß das Gerät mindestens ein Sendeelement (54, 110) zum Aussenden von Wellen aufweist, die geeignet sind, von Streugut reflektiert zu werden, das von dem Streuglied während des Betriebs des Gerätes ausgestreut wird, wobei das Sendeelement (54, 110) derart angeordnet ist, daß die ausgesandten Wellen eine Ebene (52) schneiden, in der das Gut im Betrieb das Streuglied verläßt, und wobei ein Empfangselement an dem Gerät angeordnet ist, von dem Wellen zu empfangen sind, die von dem Sendeelement ausgesandt und von dem durch das Streuglied ausgestreuten Gut reflektiert worden sind, und daß die Streuung des durch das Streuglied (12) ausgestreuten Gutes mittels der reflektierten Wellen zu messen ist.

2. Streugerät nach Anspruch 1,
dadurch gekennzeichnet, daß die während des Betriebs des Gerätes ausgestreute Gutmenge mittels der Wellen zu messen ist, die ausgesandt und reflektiert werden und insbesondere Radar-, Ultraschall-, Ultraviolett- und/oder Infrarot-Wellen sind.

3. Streugerät nach Anspruch 1 oder 2,
dadurch gekennzeichnet, daß die Wellen während des Betriebs des Gerätes in einer Richtung (108) der Ebene (52) ausgesandt werden, in der das Gut von dem Streuglied (12) ausgestreut wird, wobei die Richtung von der vertikalen Richtung abweicht, oder in einer Richtung, die von einer Richtung abweicht, die senkrecht zu der zu bestreuenden Fläche verläuft.

4. Streugerät nach einem der vorhergehenden Ansprüche,
dadurch gekennzeichnet, daß die erzeugten Spannungen oder Ströme nach Verstärkung und/oder Umwandlung in dem Empfangselement ein Bild auf einem Display anzeigen.

5. Streugerät nach einem der vorhergehenden Ansprüche,
dadurch gekennzeichnet, daß mehrere Sende- und Empfangselemente um eine Achse gruppiert sind, um welche das Streuglied drehbar ist, wobei die Sende- und Empfangselemente in bezug auf die Ebene, in der das Gut das Streuglied verläßt, auf derselben Seite angeordnet sind.

6. Streugerät nach einem der Ansprüche 1 bis 5,
dadurch gekennzeichnet, daß das die Wellen aussendende Element (54) unterhalb des Streugliedes (12) angeordnet ist.

7. Streugerät nach einem der Ansprüche 1 bis 6,
dadurch gekennzeichnet, daß das Sendeelement (110) Wellen in einer Richtung aussendet, die parallel zu der Achse (11) verläuft, um die das Streuglied (12) drehbar ist.

8. Streugerät nach einem der Ansprüche 1 bis 7,
dadurch gekennzeichnet, daß die Sendeelemente (110) mit einer an dem Gerät vorgesehenen Reflexionsfläche (114) Zusammenwirken, die derart angeordnet ist, dar Wellen, die nicht von während des Betriebs ausgestreutem Gut reflektiert werden, in eine Richtung (116) reflektiert werden, die von der Übertragungsrichtung der Wellen abweicht.

9. Streugerät nach einem der vorhergehenden Ansprüche,
dadurch gekennzeichnet, daß das Streuglied (12) mit einer oder mehreren Dosieröffnungen (22) zusammenwirkt, durch welche das Gut dem Streuglied (12) zugeführt wird, die mehr oder weniger weitgehend zu schließen sind, und durch welche das Gut dem Streuglied zuzuführen ist.

10. Streugerät nach Anspruch 9,
dadurch gekennzeichnet, daß die Dosieröffnungen (22) gemeinsam mehr oder weniger weitgehend zu schließen sind.

11. Streugerät nach den Ansprüchen 9 oder 10,
dadurch gekennzeichnet, daß die Dosieröffnungen (22) in einer gewölbten Fläche (18) angeordnet sind, die auf einem eine Mittellinie (21) umgebenden Bogen liegt, wobei sich die Mittellinie zumindest im wesentlichen in horizontaler Richtung erstreckt, wenn sich das Gerät in horizontaler Lage befindet, und die unteren Enden einer oder mehrerer Dosieröffnungen (22) zumindest annähernd senkrecht unterhalb der Mittellinie (21) der gewölbten Fläche (18) angeordnet sind.

12. Streugerät nach einem der Ansprüche 9 bis 11,
dadurch gekennzeichnet, daß die Dosieröffnungen (22) von langgestreckter Form und zumindest im wesentlichen parallel zueinander angeordnet sind.

13. Streugerät nach einem der vorhergehenden Ansprüche,
dadurch gekennzeichnet, daß die Verteilung des Gutes in dem Streubild, in dem das Gut von dem Streuglied (12) ausgestreut wird, auf einem Display (91 oder 106) anzuzeigen ist, das mittels flexibler Anschlüsse mit dem Gerät verbunden und in der Nähe des Sitzes des Schleppers oder eines ähnlichen Fahrzeugs anzubringen ist, an den das Gerät anschließbar ist.

14. Streugerät nach einem der Ansprüche 9 bis 13,
dadurch gekennzeichnet, daß nahe jeder Dosieröffnung (22) ein Verschlußglied (23) angeordnet ist, das unabhängig von den Verschlußgliedern nahe den anderen Dosieröffnungen einstellbar ist, wobei die Anordnung so getroffen ist, daß die Verteilung des Gutes auf das Streubild zu steuern ist.

15. Streugerät nach den Ansprüchen 13 oder 14,
dadurch gekennzeichnet, daß in der Nähe des Displays (91) eine Anzahl Steuerelemente (95) angeordnet sind, die der Anzahl der Verschlußglieder entsprechen, wobei jedes Verschlußglied mit einem Steuerglied gekoppelt ist, und daß das Display (91) mit einer Schaltvorrichtung (30, 26) verbunden ist, die an die Verschlußglieder angeschlossen ist, wobei die Anordnung so getroffen ist, daß die von dem Display angezeigte Information in Verbindung mit der Schaltvorrichtung eine automatische Stellvorrichtung für die Verschlußglieder bildet.

16. Streugerät nach den Ansprüchen 13 oder 14,
dadurch gekennzeichnet, daß das Display (106) eine Schalttafel (107) aufweist, die mit einer Schaltvorrichtung verbunden ist, an die das Display angeschlossen ist, wobei die pro Hektar auszustreuende Gutmenge und/oder die Verteilung des Gutes auf das Streubild, in dem das Gut von dem Streuglied ausgestreut wird, und/oder die Streubreite, in der das Gut von dem Streuglied (12) auszustreuen ist, über die Schalttafel einzugeben ist und die einzugebenden Werte mit gemessenen, tatsächlichen Werten zu vergleichen sind.

17. Streugerät nach einem der Ansprüche 9 bis 16,
dadurch gekennzeichnet, daß die Dosieröffnungen (22) auf einem Bogen um die Drehachse (11) des Streugliedes (12) verstellbar sind, wobei die Anordnung so getroffen ist, daß die Streurichtung des von dem Streuglied ausgestreuten Gutes durch Verändern der Position der Dosieröffnungen um die Drehachse herum einzustellen ist, und daß das Display eine Anzeigevorrichtung (94) aufweist, mittels der die Sektorlage des Streubildes zur Drehachse des Streugliedes in bezug auf die Arbeitsrichtung des Gerätes anzuzeigen ist.

18. Streugerät nach Anspruch 17,
dadurch gekennzeichnet, daß die Dosieröffnungen (22) an einem unteren Ende (17) des Vorratsbehälters angeordnet sind, das einen Dosierteil bildet, der relativ zu dem weiteren Teil des Vorratsbehälters einstellbar ist, und daß der Dosierteil mittels einer Stellvorrichtung (46) einzustellen ist, die mit einem automatischen Stellmechanismus verbunden ist, der den Dosierteil in Abhängigkeit von der Anzeige der Sektorlage des Streubildes zur Drehachse (11) des Streugliedes (12) einstellt.

19. Streugerät nach einem der Ansprüche 9 bis 18,
dadurch gekennzeichnet, daß in dem Vorratsbehälter (5) in der Nähe der Dosieröffnungen (22) Durchfluß-Förderglieder (39) angeordnet sind, die während des Betriebs den Materialfluß aus dem Vorratsbehälter durch die Dosieröffnungen hindurch beeinflussen.

20. Streugerät nach einem der vorhergehenden Ansprüche,
dadurch gekennzeichnet, daß das Gerät eine elektronische Meßeinrichtung zum Messen der Streubreite des auszustreuenden Gutes aufweist, und daß das Meßergebnis der elektronischen Meßeinrichtung an ein Display (91, 106) weitergeleitet wird, das in der Nähe des Fahrersitzes lösbar anzubringen ist.

21. Streugerät nach Anspruch 20,
dadurch gekennzeichnet, daß das Gerät ein Streuglied (12) aufweist, dessen Antriebsgeschwindigkeit während des Betriebs zu verändern und zu messen ist.

22. Streugerät nach den Ansprüchen 20 oder 21,
dadurch gekennzeichnet, daß die elektronische Messung der Drehgeschwindigkeit des Streugliedes (12) durch Überwachung der Lage eines das Streuglied (12) antreibenden Reibrades (61) erfolgt.

23. Streugerät nach Anspruch 22,
dadurch gekennzeichnet, daß das Streuglied (12) mit einer Trägerbuchse (13) verbunden ist, die in Längsrichtung relativ zu ihrem Lager (72) an dem Rahmen des Gerätes verschiebbar ist.

24. Streugerät nach den Ansprüchen 22 oder 23,
dadurch gekennzeichnet, daß das Reibrad (61) zum Einstellen der Drehgeschwindigkeit des Streugliedes zwecks Erzielung der gewünschten Streubreite automatisch einzustellen ist.

## Revendications

1. Machine pour épandre de la matière, en particulier de la matière granulaire et/ou pulvérulente, telle que de l'engrais, laquelle machine comprend un châssis (1), une trémie (5) et au moins un organe épandeur (12) entraîné,
**caractérisée** en ce que la machine est munie d'au moins un organe émetteur (54, 110) pour émettre des ondes aptes à être réfléchies par la matière épandue par l'organe épandeur pendant le fonctionnement de la machine, l'organe émetteur (54, 110) étant agencé de telle sorte que les ondes émises croisent un plan (52) dans lequel, au cours du fonctionnement, la matière va quitter l'organe épandeur, un organe récepteur étant prévu sur la machine et étant apte à recevoir les ondes émises par l'organe émetteur et réfléchies à partir de la matière épandue par l'organe épandeur, et en ce que l'épandage de la matière épandue par l'organe épandeur (12) est mesurable au moyen des ondes réfléchies.

2. Machine selon la revendication 1, caractérisée en ce que la quantité de matière épandue au cours du fonctionnement de la machine est mesurable au moyen des ondes qui sont émises et réfléchies, et qui sont, en particulier, des ondes de radar, des ondes ultrasoniques, ultraviolettes et/ou infrarouges.

3. Machine selon la revendication 1 ou 2, caractérisée en ce que, pendant le fonctionnement de la machine, les ondes sont émises dans une direction (108) du plan (52) le long duquel la matière est projetée par l'organe épandeur (12), ladite direction s'écartant de la direction verticale, ou dans une direction s'écartant d'une direction perpendiculaire à la surface destinée à recevoir l'épandage.

4. Machine selon l'une quelconque des revendications précédentes, caractérisée en ce que les tensions engendrées ou les courants engendrées donnent lieu, après amplification et/ou décodage, dans l'organe récepteur, à l'affichage d'une image sur un dispositif d'affichage.

5. Machine selon l'une quelconque des revendications précédentes, caractérisée en ce qu'un certain nombre d'organes émetteurs et récepteurs sont disposés autour d'un axe autour duquel l'organe épandeur est mobile, les organes émetteurs et récepteurs étant disposés sur la même face du plan dans lequel la matière quitte l'organe épandeur.

6. Machine selon l'une quelconque des revendications 1 à 5, caractérisée en ce que l'organe (54) pour émettre les ondes est situé sous l'organe épandeur (12).

7. Machine selon l'une quelconque des revendications 1 à 6, caractérisée en ce que l'organe émetteur (110) est disposé pour émettre des ondes dans une direction parallèle à l'axe (11) autour duquel l'organe épandeur (12) est mobile.

8. Machine selon l'une quelconque des revendications 1 à 7, caractérisée en ce que les organes émetteurs (110) coopèrent avec un plan réfléchissant (114) disposé sur la machine, ledit plan réfléchissant étant disposé de telle sorte que les ondes qui ne sont pas réfléchies par la matière épandue pendant le fonctionnement sont réfléchies dans une direction (116) s'éloignant de la direction d'émission.

9. Machine selon l'une quelconque des revendications précédentes, caractérisée en ce que l'organe épandeur (12) coopère avec deux ou plus de deux ouvertures doseuses (22) à travers lesquelles la matière est fournie à l'organe épandeur (12), et lesquelles ouvertures peuvent être plus ou moins obturées, et à travers lesquelles la matière peut être fournie à l'organe épandeur.

10. Machine selon la revendication 9, caractérisée en ce que les ouvertures doseuses (22) peuvent ensemble être plus ou moins obturées.

11. Machine selon la revendication 9 ou 10, caractérisée en ce que les ouvertures doseuses (22) sont prévues dans un plan de paroi incurvé (18), lequel plan de paroi est courbé autour d'un axe (21) qui est situé au moins sensiblement horizontalement quand la machine est en position horizontale, les extrémités inférieures d'une ou plusieurs des ouvertures doseuses (22) étant situées au moins approximativement perpendiculairement en dessous de l'axe (21) du plan de paroi incurvé (18).

12. Machine selon l'une quelconque des revendications 9 à 11, caractérisée en ce que les ouvertures doseuses (22) sont allongées et sont situées au moins sensiblement parallèlement entre elles.

13. Machine selon l'une quelconque des revendications précédentes, caractérisée en ce que la répartition de la matière sur le modèle d'épandage sur lequel la matière est épandue par l'organe épandeur (12) peut être affichée sur un dispositif d'affichage (91 ou 106) qui est relié au moyen de connexions flexibles à la machine et qui peut être installé près du siège du tracteur ou d'un véhicule analogue auquel la machine peut être attelée.

14. Machine selon l'une quelconque des revendications 9 à 13, caractérisée en ce qu'il est prévu, près de chacune des ouvertures doseuses (22), un organe obturateur (23) qui est réglable indépendamment des organes obturateurs près des autres ouvertures doseuses, l'agencement étant tel que la répartition de la matière sur le modèle d'épandage peut être commandée.

15. Machine selon la revendication 13 ou 14, caractérisée en ce que, près du dispositif d'affichage (91) sont disposés un certain nombre d'organes de commande (95) correspondant au nombre d'organes obturateurs, et en ce que le dispositif d'affichage (91) est couplé à un mécanisme de commutation (30, 26) qui est relié aux organes obturateurs, l'agencement étant tel que l'information affichée par le dispositif d'affichage constitue un dispositif de réglage automatique pour les organes obturateurs par l'intermédiaire dudit mécanisme de commutation.

16. Machine selon la revendication 13 ou 14, caractérisée en ce que le dispositif d'affichage (106) comporte un clavier (107) qui et relié à un mécanisme de commutation auquel est couplé le dispositif d'affichage, avec la possibilité d'introduire par le clavier la quantité de matière à épandre par hectare et/ou la répartition de la matière sur le modèle d'épandage sur lequel la matière est épandue par l'organe épandeur et/ou la largeur d'épandage sur laquelle la matière peut être épandue par l'organe épandeur (12), lesquelles valeurs à introduire sont comparables aux valeurs réelles mesurées.

17. Machine selon l'une quelconque des revendications 9 à 16, caractérisée en ce que les ouvertures doseuses (22) sont réglables autour de l'axe de rotation (11) de l'organe épandeur (12), l'agencement étant tel que la direction d'épandage de la matière épandue par l'organe épandeur puisse être réglée en changeant la position des ouvertures doseuses autour de l'axe de rotation, et en ce que le dispositif d'affichage comporte des moyens d'indication (94) au moyen desquels la position du modèle d'épandage autour de l'axe de rotation de l'organe épandeur par rapport au sens de marche du travail de la machine pourra être affichée.

18. Machine selon la revendication 17, caractérisée en ce que les ouvertures doseuses (22) sont disposées dans une extrémité inférieure (17) de la trémie, laquelle extrémité inférieure constitue une partie doseuse qui est réglable par rapport à l'autre partie de la trémie, et en ce que la partie doseuse est réglable au moyen d'un dispositif de réglage (46) qui est couplé à un mécanisme de réglage automatique qui règle la partie doseuse en fonction de l'indication de la position du modèle d'épandage autour de l'axe de rotation (11) de l'organe épandeur (12).

19. Machine selon l'une quelconque des revendications 9 à 18, caractérisée en ce que, dans la trémie (5) près des ouvertures doseuses (22) sont prévus des organes d'écoulement (39) qui influencent pendant le travail l'écoulement de matière de la trémie à travers les ouvertures doseuses.

20. Machine selon l'une quelconque des revendications précédentes, caractérisée en ce que la machine comporte un dispositif de mesure électronique pour mesurer la largeur de travail de la matière à épandre, et en ce que le résultat du dispositif de mesure électronique est transmis à un dispositif d'affichage (91, 106) qui peut être prévu amovible près du siège du conducteur de la machine.

21. Machine selon la revendication 20, caractérisée en ce que la machine comporte un organe épandeur (12) dont la vitesse de circulation par entraînement peut être changée et être mesurée pendant le fonctionnement.

22. Machine selon la revendication 20, caractérisée en ce que la mesure électronique de la vitesse de rotation de l'organe épandeur (12) est effectuée par observation de l'emplacement d'une roue à friction (61) entraînant ledit organe épandeur (12).

23. Machine selon la revendication 22, caractérisée en ce que l'organe épandeur (12) est relié à une bague porteuse (13) qui est mobile en sens longitudinal par rapport à son palier (72) dans le châssis de la machine.

24. Machine selon la revendication 22 ou 23, caractérisée en ce que la roue à friction (61) est réglable automatiquement pour régler la vitesse de rotation de l'organe épandeur afin d'obtenir une largeur de travail désirée.
